# EUROPEAN PATENT APPLICATION

(11) **EP 4 625 725 A1**
(43) Date of publication of application: **01.10.2025**
(21) Application number: 24166652.8
(22) Date of filing: 27.03.2024
(51) Int. Cl.: H01S 3/00, H01S 3/067, H01S 3/13, H01S 3/23, B23K 26/00, F41H 13/00

(54) **OPTICAL SOURCE**

(71) Applicant: NKT Photonics A/S, 3460 Birkerød (DK)
(72) Inventor: YARROW, Michael, Southampton, SO31 4RA (GB); CHARD, Simon, Southampton, SO31 4RA (GB); HIGMAN, Malcolm, Chichester, PO19 7XW (GB)
(74) Representative: Zacco Denmark A/S

(57) **Abstract**

An optical source (100) comprising a primary optical signal source (110), optical taps (102) for forming optical tap signals, a first fast optical switch (104), a secondary optical signal source (120) and a second fast optical switch (106). Each optical signal source comprises a seed laser (112, 122) for generating a seed laser signal and spectral broadening apparatus (114, 124) to broaden the seed laser signal to output a broadened laser signal. The optical source further comprises an optical fibre amplifier (108), an optical combiner (128), a plurality of optical monitoring apparatus (118) and control circuitry (126). Each optical monitoring apparatus is configured to output a respective alarm signal responsive to determining that the respective optical tap signal is indicative of a fault in the spectral broadening apparatus of the primary optical signal source resulting in insufficient broadening of the seed laser signal. The control circuitry (126) is configured to output: an initial control signal to cause the first fast optical switch to pass optical signals and the second fast optical switch to block optical signals; and a switching control signal, responsive to receiving respective first alarm signals from a majority of the optical monitoring apparatus, to cause the first fast optical switch to block optical signals and to cause the second fast optical switch to pass optical signals.

## Description

### Technical Field

The invention relates to an optical source. The invention further relates to a high energy laser processing system comprising the optical source. The invention further relates to a laser directed energy weapon comprising the optical source.

### Background

Narrow linewidth, high power (e.g. kW) laser sources, such as those used for high energy laser processing or laser directed energy, typically comprise a laser source and one or more high power fibre amplifiers to amplify a seed laser signal up to the required operating optical power. Suitable laser sources often consist of a very narrow linewidth seed laser and a spectral broadening module to increase the linewidth in order to mitigate stimulated Brillouin scattering (SBS) in the fibre amplifier. High power fibre amplifiers, such as Ytterbium doped fibre amplifiers, capable of amplifying up to kW optical powers are very vulnerable to damage in the case of a failure of the any of the components of the spectral broadening module. A fault in the spectral broadening module can result in the seed laser being passed unbroadened into the fibre amplifier, and the resulting pulsing due to SBS can cause catastrophic damage to the fibre amplifier in a very short time (the timescale for build up of SBS is approximately 10 ns). The SBS also produces backward travelling pulses which can damage many components of a laser system, all the way back to the seed laser..

### Summary

It is an object to provide an improved optical source suitable for high power applications. It is a further object to provide an improved high energy laser processing system. It is a further object to provide an improved laser directed energy weapon.

An aspect provides an optical source comprising a primary channel, a secondary channel, an optical fibre amplifier, an optical combiner, a plurality of optical monitoring apparatus and control circuitry. The primary channel comprises a primary optical signal source, plurality of optical taps and a first fast optical switch. The plurality of optical taps are provided after the primary optical signal source for forming a plurality of optical tap signals. The first fast optical switch is at an output end of the primary channel. The secondary channel comprises a secondary optical signal source and a second fast optical switch at an output end of the secondary channel. Each of the primary optical signal source and the secondary optical signal source comprises a seed laser for generating a seed laser signal having a seed spectral linewidth and spectral broadening apparatus operable to broaden the seed laser signal to output a broadened laser signal having a second spectral linewidth, broader than the seed spectral linewidth. The optical fibre amplifier is for amplifying a said broadened laser signal. The optical combiner is arranged to couple the primary channel and the secondary channel to the optical fibre amplifier. The plurality of optical monitoring apparatus are configured to receive respective optical tap signals and are each configured to output a respective first alarm signal responsive to determining that the respective optical tap signal is indicative of a fault in the spectral broadening apparatus of the primary optical signal source resulting in insufficient broadening of the seed laser signal. The control circuitry is configured to output at least one initial control signal configured to cause the first fast optical switch to pass optical signals and the second fast optical switch to block optical signals. The control circuitry is further configured to output at least one switching control signal, responsive to receiving respective first alarm signals from a majority of the optical monitoring apparatus. The at least one switching control signal is configured to cause the first fast optical switch to be configured to block optical signals and to cause the second fast optical switch to be configured to pass optical signals.

The optical source may enable protection of its optical fibre amplifier from damage due to SBS in the event of a fault in the spectral broadening apparatus of the primary optical signal source resulting in insufficient broadening of the seed laser signal. The optical source may also enable fast switching to its secondary optical signal source in the event of a fault in the spectral broadening apparatus of the primary optical signal source, to enable continued delivery of an amplified, broadened laser signal. Use of a plurality of optical monitoring apparatus may mitigate risk of a false detection of a fault in the spectral broadening apparatus. Outputting a switching control signal only when a majority of the optical monitoring apparatus agree that there is a fault in the spectral broadening apparatus may ensure that a switching control signal is only output when there is a high degree of certainty that there is a fault. This may mitigate risk of inappropriate switching due to false detection of a fault in the spectral broadening apparatus. The optical source therefore advantageously provides improved protection of one of its most expensive components and improved continuity of operation for a user.

In an embodiment the spectral broadening apparatus comprises radio frequency, RF, drive signal apparatus and a phase modulator. The RF is operative to generate an RF drive signal having an RF signal power. The phase modulator is operative to apply phase modulation to the seed laser signal when an RF drive signal is received to form a broadened laser signal having the second spectral linewidth. The phase modulator is further operative to output the seed laser signal unbroadened when an RF drive signal is not received. The optical monitoring apparatus is configured to output a first alarm signal responsive to determining that the first optical tap signal is indicative of a fault in at least one of the RF drive signal apparatus or the phase modulator of the primary optical signal source resulting in insufficient broadening of the seed laser signal. This may enable protection of the optical fibre amplifier from damage due to SBS in the event of a fault in the RF drive signal apparatus and/or the phase modulator.

In an embodiment, the first fast optical switch is a first semiconductor optical amplifier, SOA, and the second fast optical switch is a second SOA. The at least one initial control signal is configured to cause the first SOA to be configured to amplify optical signals and to cause the second SOA to be configured to absorb optical signals. The at least one switching control signal is configured to cause the first SOA to be configured to absorb optical signals and to cause the second SOA to be configured to amplify optical signals. Using SOAs as the fast optical switches may enable pre-amplification of the broadened laser signal before it is delivered to the optical fibre amplifier, which may enable a higher output optical power to be achieved. Amplification with SOAs can also reduce relative intensity noise, RIN, which is beneficial for high power amplification and coherent combination. Using SOAs as the fast optical switches may enable the seed lasers of both channels to be permanently running during operation of the optical source, enabling fast switching from the primary channel to the secondary channel in the event of a fault in the spectral broadening apparatus and improved continuity of operation.

In an embodiment, the primary optical channel further comprises an optical delay line between a final optical tap and the first fast optical switch. This advantageously reduces the length of time during which an insufficiently broadened seed signal may be delivered to the optical fibre amplifier before the first fast optical switch is configured to block optical signals, which may mitigate the build up of stimulated Brillouin scattering, SBS, in the optical fibre amplifier.

In an embodiment, the optical delay line is configured to apply a delay greater than a time required for a majority of the optical monitoring apparatus to determine that respective optical tap signals are indicative of a fault in the spectral broadening apparatus and for the first fast optical switch to be configured to block optical signals. This advantageously increases the length of time for completing the reconfiguration of the fast optical switches so that it is longer than the total of the time required to detect a fault, the time to transmit the alarm signal and the control signal, and the switching or rise time of the fast optical switch. This may ensure that the first fast optical switch is configured to block optical signals before an insufficiently broadened seed signal reaches the first fast optical switch, which advantageously prevents an insufficiently broadened seed signal being delivered to the optical fibre amplifier and thus prevents SBS occurring in the optical fibre amplifier.

In an embodiment, the optical fibre amplifier comprises an active optical fibre and a pump laser.

In an embodiment, the control circuitry is configured to output a first switching control signal. The first switching control signal is configured to cause the first fast optical switch to be configured to block optical signals. The control circuitry is configured to output a second switching control signal configured to cause the pump laser to switch off. The control circuitry is configured to output a third switching control signal configured to cause the second fast optical switch to be configured to pass optical signals. The control circuitry is configured to output the third switching control signal subsequently to the first switching control signal and the second switching control signal.

This may enable there to be a delay between configuring the first fast optical switch to block optical signals and configuring the second fast optical switch to pass optical signals, without self-lasing occurring in the optical fibre amplifier.

In an embodiment, the secondary optical channel further comprises a secondary optical tap after the secondary optical signal source for forming a secondary optical tap signal and secondary optical monitoring apparatus. The secondary optical monitoring apparatus is configured to receive the secondary optical tap signal and is configured to output a second alarm signal responsive to determining that the secondary optical tap signal is indicative of a fault in the spectral broadening apparatus of the secondary optical signal source resulting in insufficient broadening of the seed laser signal. The control circuitry is further configured to output at least one secondary switching control signal, responsive to receiving the second alarm signal, configured to cause the second fast optical switch to be configured to block optical signals and to cause the first fast optical switch to be configured to pass optical signals. This may enable protection of its optical fibre amplifier from damage due to SBS in the event of a fault in the spectral broadening apparatus of the secondary optical signal source resulting in insufficient broadening of the seed laser signal.

In an embodiment, the optical monitoring apparatus comprises optical filter apparatus, a photodetector and monitoring control circuitry. The optical filter apparatus has a transmission profile configured to form an optical monitoring signal by modifying an optical power of a received optical tap signal dependent on a spectral linewidth of the optical tap signal. The photodetector is configured to detect the optical monitoring signal and to output a detection signal indicative of the optical power of the optical monitoring signal. The monitoring control circuitry is configured to receive the detection signal and to output a said alarm signal responsive to the optical monitoring signal having an optical power indicative of a spectral linewidth indicative of a fault in the spectral broadening apparatus of the primary optical source resulting in insufficient broadening of the seed laser signal. The optical monitoring apparatus advantageously enables the spectral linewidth of an optical tap signal to be represented and detected as an optical power, enabling a simple, low cost and rugged way to monitor the spectral linewidth of the corresponding optical signal generated by the primary channel, with a fast speed of response.

In an embodiment, the monitoring control circuitry is configured to output a said alarm signal responsive to the optical monitoring signal having an optical power indicative of a spectral linewidth indicative of a fault in at least one of the RF drive signal apparatus or the phase modulator of the primary optical signal source resulting in insufficient broadening of the seed laser signal. This may enable a fault in either component of the spectral broadening apparatus to be identified and a resulting alarm signal to be output.

In an embodiment, optical monitoring apparatus comprises optical linewidth measurement apparatus configured to determine a linewidth of a received optical tap signal and configured to output a said alarm signal responsive to determining that the optical tap signal has a spectral linewidth indicative of a fault in the spectral broadening apparatus of the primary optical source resulting in insufficient broadening of the seed laser signal. The optical linewidth measurement apparatus advantageously enables an alarm signal to be generated based on a direct measurement of the linewidth.

In an embodiment, the optical linewidth measurement apparatus comprises one of an optical spectrum analyser and optical interferometer based linewidth measurement apparatus. This may enable a very accurate measurement of the linewidth, which may mitigate risk of a false detection of a fault in the spectral broadening apparatus.

In an embodiment, the seed laser signal has a seed optical power in the range 1 mW to 200 mW. The optical source comprises a plurality of optical fibre amplifiers for amplifying a said broadened laser signal. The optical fibre amplifiers are arranged in series and are configured to amplify the broadened laser signal to an optical power of up to 5 kW.

In an embodiment, the optical source comprises a plurality of optical amplifiers as described above and an optical splitter. The optical splitter is configured to split broadened laser signals received from the optical combiner and route the split broadened laser signals to respective optical amplifiers. This may enable multiple output signals to be formed, which may be combined to form a high power output.

In an embodiment, each optical fibre amplifier comprises an active optical fibre and a pump laser. The at least one switching control signal is further configured to cause each pump laser to switch off.

In an embodiment, the seed lasers are distributed feedback, DFB, fibre lasers.

In an alternative embodiment, the seed lasers are one of bulk nonplanar ring oscillators, NPRO, DFB diode lasers, distributed Bragg reflector, DBR, diode lasers, or external cavity diode lasers.

Corresponding embodiments and advantages apply to the high energy laser processing system and to the laser directed energy weapon described below.

A high energy laser processing system comprising an optical source. The optical source comprises a primary channel, a secondary channel, an optical fibre amplifier, an optical combiner, a plurality of optical monitoring apparatus and control circuitry. The primary channel comprises a primary optical signal source, plurality of optical taps and a first fast optical switch. The plurality of optical taps are provided after the primary optical signal source for forming a plurality of optical tap signals. The first fast optical switch is at an output end of the primary channel. The secondary channel comprises a secondary optical signal source and a second fast optical switch at an output end of the secondary channel. Each of the primary optical signal source and the secondary optical signal source comprises a seed laser for generating a seed laser signal having a seed spectral linewidth and spectral broadening apparatus operable to broaden the seed laser signal to output a broadened laser signal having a second spectral linewidth, broader than the seed spectral linewidth. The optical fibre amplifier is for amplifying a said broadened laser signal. The optical combiner is arranged to couple the primary channel and the secondary channel to the optical fibre amplifier. The plurality of optical monitoring apparatus are configured to receive respective optical tap signals and are each configured to output a respective first alarm signal responsive to determining that the respective optical tap signal is indicative of a fault in the spectral broadening apparatus of the primary optical signal source resulting in insufficient broadening of the seed laser signal. The control circuitry is configured to output at least one initial control signal configured to cause the first fast optical switch to pass optical signals and the second fast optical switch to block optical signals. The control circuitry is further configured to output at least one switching control signal, responsive to receiving respective first alarm signals from a majority of the optical monitoring apparatus. The at least one switching control signal is configured to cause the first fast optical switch to be configured to block optical signals and to cause the second fast optical switch to be configured to pass optical signals.

A laser directed energy weapon comprising an optical source. The optical source comprises a primary channel, a secondary channel, an optical fibre amplifier, an optical combiner, a plurality of optical monitoring apparatus and control circuitry. The primary channel comprises a primary optical signal source, plurality of optical taps and a first fast optical switch. The plurality of optical taps are provided after the primary optical signal source for forming a plurality of optical tap signals. The first fast optical switch is at an output end of the primary channel. The secondary channel comprises a secondary optical signal source and a second fast optical switch at an output end of the secondary channel. Each of the primary optical signal source and the secondary optical signal source comprises a seed laser for generating a seed laser signal having a seed spectral linewidth and spectral broadening apparatus operable to broaden the seed laser signal to output a broadened laser signal having a second spectral linewidth, broader than the seed spectral linewidth. The optical fibre amplifier is for amplifying a said broadened laser signal. The optical combiner is arranged to couple the primary channel and the secondary channel to the optical fibre amplifier. The plurality of optical monitoring apparatus are configured to receive respective optical tap signals and are each configured to output a respective first alarm signal responsive to determining that the respective optical tap signal is indicative of a fault in the spectral broadening apparatus of the primary optical signal source resulting in insufficient broadening of the seed laser signal. The control circuitry is configured to output at least one initial control signal configured to cause the first fast optical switch to pass optical signals and the second fast optical switch to block optical signals. The control circuitry is further configured to output at least one switching control signal, responsive to receiving respective first alarm signals from a majority of the optical monitoring apparatus. The at least one switching control signal is configured to cause the first fast optical switch to be configured to block optical signals and to cause the second fast optical switch to be configured to pass optical signals.

Embodiments of the invention will now be described, by way of example only, with reference to the accompanying drawings.

### Brief Description of the drawings

Figures 1 to 4 and 6 to 11 are block diagrams illustrating embodiments of optical sources; and
Figure 5 shows plots of: (A) variation of the linewidth of an optical signal output from the primary optical channel at the monitoring apparatus and at the first SOA of Figure 4; (B) drive currents to the first SOA and the second SOA of Figure 4; and the corresponding variation output optical power of the optical source of Figure 4.

### Detailed description

The same reference numbers are used for corresponding features in different embodiments.

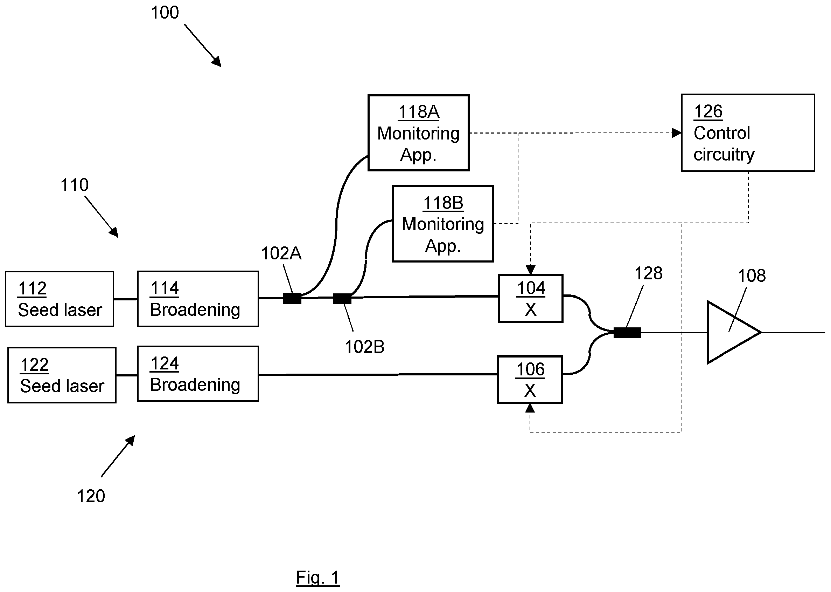

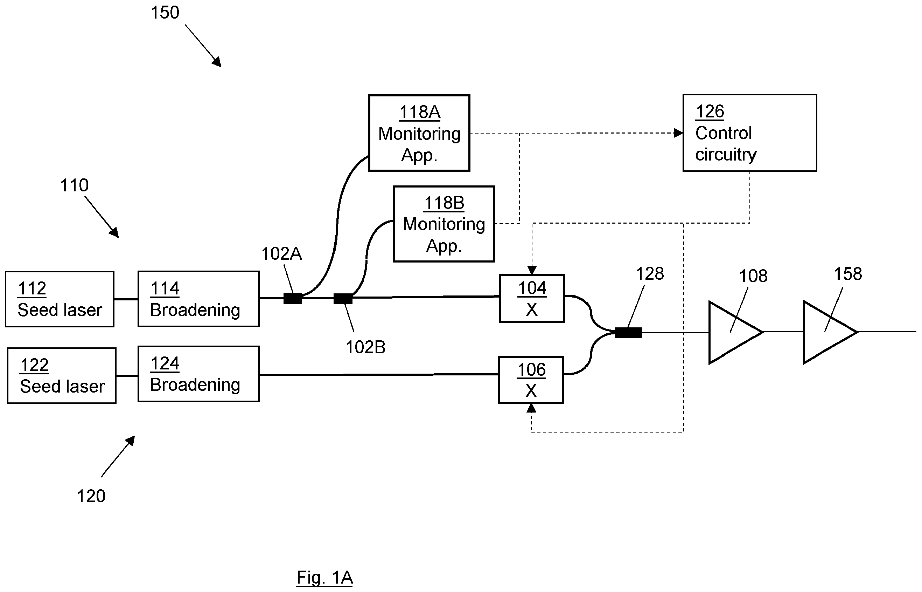

Referring to Figure 1, an embodiment provides an optical source 100 comprising a primary channel, a secondary channel, an optical fibre amplifier 108, an optical combiner 128, a plurality of optical taps 102, a plurality of optical monitoring apparatus 118 and control circuitry 126.

The primary channel comprises a primary optical signal source 110, which comprises a first seed laser 112 and a first spectral broadening apparatus 114. The first seed laser 112 is for generating a first seed laser signal having a seed wavelength and a seed spectral linewidth. The first spectral broadening apparatus 114 is operable to broaden the first seed laser signal to output a broadened laser signal having a second spectral linewidth, broader than the seed spectral linewidth.

A plurality of optical taps 102 are provided after the output of the first spectral broadening apparatus 114, for splitting off portions of an optical signal output from the first spectral broadening apparatus to form a plurality of optical tap signals. In this embodiment, two optical taps 102A, 102B are provided and each forms a respective optical tap signal. It will be appreciated that more than two optical taps may be provided, each forming a respective optical tap signal. A first fast optical switch 104 is provided at an output end of the primary channel.

The secondary channel comprises a secondary optical signal source 120, which comprises a second seed laser 122 and a second spectral broadening apparatus 124. The second seed laser 142 is for generating a second seed laser signal having substantially the same seed wavelength and seed spectral linewidth as the first seed laser. 'substantially the same' here means similar enough to the first seed laser signal that one can replace the other and the optical fibre amplifier will still amplify the broadened laser signal to the same optical power. It will be appreciated by the skilled person that it is typically not practically achievable for the second seed laser to generate a second seed laser signal that is exactly the same as the first seed laser signal.

The second spectral broadening apparatus 124 is operable to broaden the second seed laser signal to output a broadened laser signal having the second spectral linewidth. A second fast optical switch 106 is provided at an output end of the secondary channel.

The optical combiner 128 is arranged to couple the primary channel to the optical fibre amplifier, so that a broadened laser signal output from the first spectral broadening apparatus 114 is delivered to the optical fibre amplifier. The optical combiner 128 is additionally arranged to couple the secondary channel to the optical fibre amplifier, so that a broadened laser signal output from the second spectral broadening apparatus 114 is delivered to the optical fibre amplifier. The optical fibre amplifier 108 is for amplifying a broadened laser signal output from the primary optical channel or the secondary optical channel.

The plurality of optical monitoring apparatus 118 are configured to receive respective optical tap signals from the optical taps. In this embodiment, a first optical monitoring apparatus 118A is configured to receive an optical tap signal from the first optical tap 102A and a second optical monitoring apparatus 118B is configured to receive an optical tap signal from the second optical tap 102B. Each optical monitoring apparatus 118 is configured to output a respective first alarm signal responsive to determining that the respective optical tap signal is indicative of a fault in the first spectral broadening apparatus 114 resulting in insufficient broadening of the first seed laser signal.

The control circuitry 126 is configured to output at least one initial control signal configured to cause the first fast optical switch 104 to pass optical signals and the second fast optical switch 106 to block optical signals. The control circuitry is also configured to output a switching control signal, responsive to receiving respective first alarm signals from a majority of the optical monitoring apparatus. Requiring receipt of respective first alarm signals from a majority of the optical monitoring apparatus ensures that the control circuitry only outputs a switching control signal when there is a high degree of certainty that there is a fault.

In this embodiment first alarm signals must be received from both the first optical monitoring apparatus and the second optical monitoring apparatus in order for the control circuitry to output a switching control signal. In an embodiment with three optical taps and three optical monitoring apparatus respective first alarm signals must be received from two of the three optical monitoring apparatus, in an embodiment with four optical taps and four optical monitoring apparatus respective first alarm signals must be received from three of the four optical monitoring apparatus, and so on.

The switching control signal is configured to cause the first fast optical switch to be configured to block optical signals and to cause the second fast optical switch to be configured to pass optical signals. Alternatively, two switching control signals may be output by the control circuitry, one for the first fast optical switch and a second for the second fast optical switch.

During normal, fault free operation, both the primary channel and the secondary channel are operational. The first seed laser 112 generates a first seed laser signal and the first spectral broadening apparatus 114 broadens the first seed laser signal to output a first broadened laser signal having a second spectral linewidth, broader than the seed spectral linewidth. The second seed laser 122 generates a second seed laser signal and the second spectral broadening apparatus 124 broadens the second seed laser signal to output a second broadened laser signal having the second spectral linewidth. The control circuitry 126 outputs an initial control signal configured to cause the first fast optical switch 104 to pass optical signals and the second fast optical switch 106 to block optical signals. The first broadened laser signal is therefore delivered, via the optical combiner 116, to the optical fibre amplifier 108.

If a fault occurs in the first spectral broadening apparatus 114 which results in insufficient broadening of the first seed laser signal, this must be detected by each optical monitoring apparatus 118A, 118B for a first alarm signal to be output. A fault in the first spectral broadening apparatus may result in the first seed laser signal still being broadened but the amount of broadening not being sufficient to allow the first broadened laser signal to be delivered to the optical fibre amplifier. A fault in the first spectral broadening apparatus may alternatively result in the first seed laser signal not being broadened at all, i.e. the first seed laser signal is simply passed through the first spectral broadening apparatus. An unbroadened seed laser signal should not be delivered to the optical fibre amplifier, since it may result in SBS within the optical fibre amplifier. In both cases, the control circuitry will output a switching control signal responsive to receiving respective first alarm signals from both optical monitoring apparatus. The switching control signal is configured to cause the first fast optical switch to be configured to block optical signals and to cause the second fast optical switch to be configured to pass optical signals.

Following reconfiguration of the fast optical switches, the second broadened laser signal is delivered to the optical fibre amplifier, enabling the optical source 100 to continue operating. The first spectral broadening apparatus 114 may then be repaired or replaced, without affecting continuing operation of the optical source.

In an embodiment, the first seed laser 112 and the second seed laser 122 are DFB fibre lasers.

In an alternative embodiment, the first seed laser 112 and the second seed laser 122 are bulk nonplanar ring oscillators (NPRO), DFB diode lasers, DBR diode lasers, or external cavity diode lasers.

Referring to Figure 1A, an embodiment provides an optical source 150 comprising a primary channel, a secondary channel, a first optical fibre amplifier 108, an optical combiner 128, a plurality of optical taps 102, a plurality of optical monitoring apparatus 118 and control circuitry 126, as described above. The optical source additionally comprises a second optical fibre amplifier 158.

The first seed laser signal has a seed optical power in the range 1 mW to 200 mW. The first optical fibre amplifier 108 and second optical fibre amplifier 158 are arranged in series, and are configured to amplify the broadened laser signal to an optical power of up to 5 kW. It will be appreciated that more than two optical fibre amplifiers in series may be used.

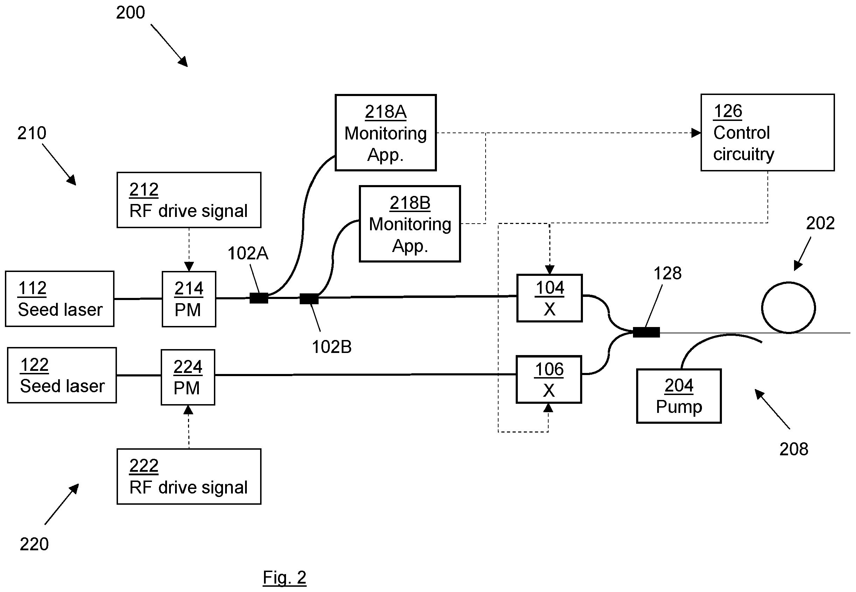

Referring to Figure 2, an embodiment provides an optical source 200 comprising a primary channel, a secondary channel, an optical fibre amplifier 208, an optical combiner 128, a plurality of optical taps 102, a plurality of optical monitoring apparatus 218 and control circuitry 126.

The primary channel comprises a primary optical signal source 210, which comprises a first seed laser 112 and a first spectral broadening apparatus. The first seed laser 112 is for generating a first seed laser signal having a seed wavelength and a seed spectral linewidth. The first spectral broadening apparatus comprises a first radio frequency, RF, drive signal apparatus 212 and a first phase modulator, PM, 214. The first RF drive signal apparatus is operative to generate a first RF drive signal having an RF signal power, for the first PM. The first PM 214 is operative to apply phase modulation to the first seed laser signal, when a first RF drive signal is received from the first RF drive signal apparatus, to form a first broadened laser signal having a second spectral linewidth, broader than the seed spectral linewidth. The first PM 214 is configured to output the first seed laser signal unbroadened when no first RF drive signal is received.

The secondary channel comprises a secondary optical signal source 220, which comprises a second seed laser 122 and a second spectral broadening apparatus. The second seed laser 122 is for generating a second seed laser signal having a seed wavelength and a seed spectral linewidth. The second spectral broadening apparatus comprises a second radio frequency, RF, drive signal apparatus 222 and a second phase modulator, PM, 224. The second RF drive signal apparatus is operative to generate a second RF drive signal having an RF signal power, for the second PM. The second PM 224 is operative to apply phase modulation to the second seed laser signal, when a second RF drive signal is received from the second RF drive signal apparatus, to form a second broadened laser signal having the second spectral linewidth. The second PM 224 is configured to output the second seed laser signal unbroadened when no second RF drive signal is received.

The optical fibre amplifier 208 comprises an active optical fibre 202 and a pump laser 204.

The plurality of optical monitoring apparatus 218 are configured to receive respective optical tap signals from the optical taps. In this embodiment, a first optical monitoring apparatus 218A is configured to receive an optical tap signal from the first optical tap 102A and a second optical monitoring apparatus 218B is configured to receive an optical tap signal from the second optical tap 102B. Each optical monitoring apparatus 218 is configured to output a respective first alarm signal responsive to determining that the respective optical tap signal is indicative of a fault in the first RF drive signal apparatus 212 and/or the first PM 214 resulting in insufficient broadening of the first seed laser signal.

The control circuitry 126 is configured to output at least one initial control signal configured to cause the first fast optical switch 104 to pass optical signals and the second fast optical switch 106 to block optical signals. The control circuitry is also configured to output a switching control signal, responsive to receiving respective first alarm signals from a majority of the optical monitoring apparatus. Requiring receipt of respective first alarm signals from a majority of the optical monitoring apparatus ensures that the control circuitry only outputs a switching control signal when there is a high degree of certainty that there is a fault.

In this embodiment first alarm signals must be received from both the first optical monitoring apparatus and the second optical monitoring apparatus in order for the control circuitry to output a switching control signal. As noted above, a greater number of optical taps and optical monitoring apparatus may be used.

The switching control signal is configured to cause the first fast optical switch to be configured to block optical signals and to cause the second fast optical switch to be configured to pass optical signals. Alternatively, two switching control signals may be output by the control circuitry, one for the first fast optical switch and a second for the second fast optical switch.

The optical combiner 128 is arranged to couple the primary channel to the optical fibre amplifier and to couple the secondary channel to the optical fibre amplifier, as described above with reference to Figure 1.

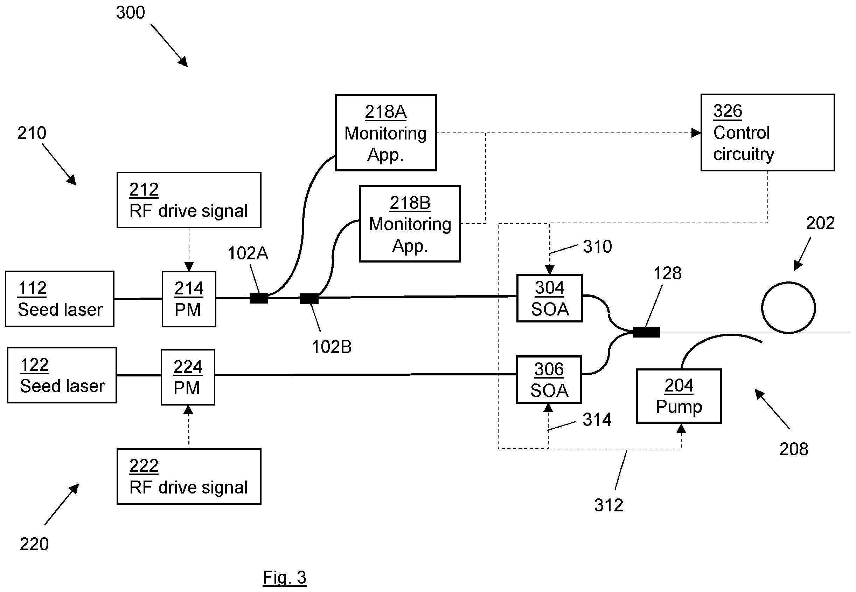

Referring to Figure 3, an embodiment provides an optical source 300 comprising a primary channel, a secondary channel, an optical fibre amplifier 208, an optical combiner 128, a plurality of optical taps 102 and a plurality of optical monitoring apparatus 218, as described above with reference to Figures 1 and 2, and control circuitry 326.

A first fast optical switch 304 is provided at an output end of the primary channel and a second fast optical switch 306 is provided at an output end of the secondary channel. The first fast optical switch is a first semiconductor optical amplifier, SOA, 304. The second fast optical switch is a second SOA 306.

The control circuitry 326 is configured to output at least one initial control signal configured to cause the first SOA 304 to be configured to amplify optical signals and to cause the second SOA 306 to be configured to absorb optical signals.

The control circuitry is also configured to output a first switching control signal 310, responsive to receiving respective first alarm signals from a majority of the optical monitoring apparatus. Requiring receipt of respective first alarm signals from a majority of the optical monitoring apparatus ensures that the control circuitry only outputs a switching control signal when there is a high degree of certainty that there is a fault.

In this embodiment first alarm signals must be received from both the first optical monitoring apparatus and the second optical monitoring apparatus in order for the control circuitry to output a switching control signal. As noted above, a greater number of optical taps and optical monitoring apparatus may be used.

The first switching control signal is configured to cause the first SOA to be configured to absorb optical signals. The control circuitry is further configured to output a second switching control signal 312 configured to cause the optical amplifier pump laser 204 to switch off. The control circuitry is further configured to output a third switching control signal 314 configured to cause the second SOA to be configured to amplify optical signals. The second switching control signal may be output at the same time as the first switching control signal, or within a time period shorter than the time period for self-lasing to occur within the optical fibre 202, which is typically of the order of milliseconds. The third switching control signal is output subsequently to the first switching control signal and the second switching control signal, and the delay before outputting the third switching control signal may be preset or manually controlled.

The SOAs may, for example, be an Innolume SOA-1060-20-YY-40dB which absorbs approximately 50 dB and can amplify a 1 mWseed laser signal to 150 mW optical power.

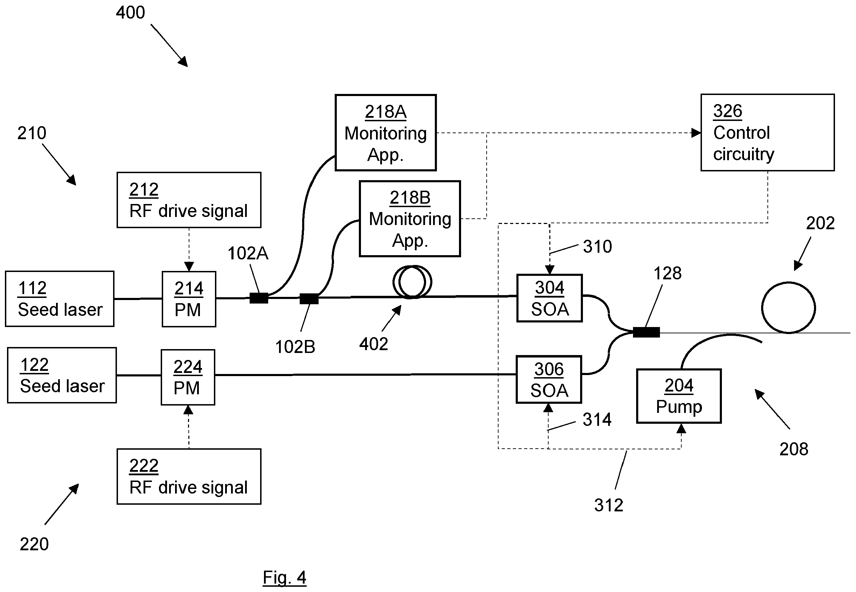

In an embodiment, illustrated in Figure 4, the optical source 400 additionally comprises an optical delay line 402 in the primary optical channel. The optical delay line is provided after the final optical tap, i.e. after the second optical tap 102B, and the first SOA 304.

In an embodiment, the optical delay line 402 is configured to apply a delay greater than a time required for a majority of the optical monitoring apparatus 218, i.e. both optical monitoring apparatus 218A, 218B, to determine that the respective optical tap signal is indicative of a fault in the first PM 214 and/or the first RF drive signal apparatus 212, for the control circuitry 326 to determine that first alarm signals have been received from both optical monitoring apparatus and to output the first switching control signal, and for the first SOA 304 to be configured to absorb optical signals.

For example, the optical delay line may be a 20 m long optical fibre, to introduce a 100 ns delay.

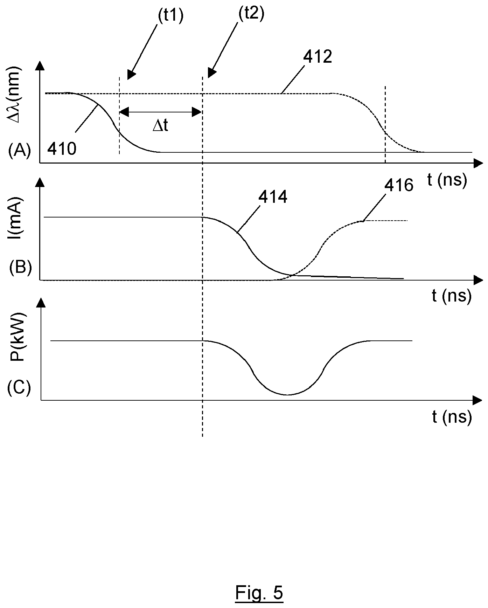

Figure 5 illustrates the switching of the first SOA 304 and the second SOA 306 in response to a detected reduction in the spectral linewidth of the optical signal output from the first PM 214, and the resulting effect on the output optical power of the optical source 400.

Figure 5(A) shows the linewidth 410 detected at the optical monitoring apparatus and the linewidth 412 at the first SOA. It shows the linewidth falling below a preset threshold at time t1. It takes at time Δt for each optical monitoring apparatus 218 to determine that the first optical tap signal is indicative of a fault in the first PM 214, for example, and for it to transmit a respective first alarm signal, and for the control circuitry to determine that first alarm signals have been received from both optical monitoring apparatus and to output a first switching control signal to the first SOA 304 and a second switching control signal to the second SOA 306. As shown in Figure 5(B), in response to receiving the first switching control signal, the first SOA drive current 414 is reduced and in response to receiving the second switching control signal, the second SOA drive current 416 is increased. As shown in Figure 5(C), during the switch from the first SOA to the second SOA, the optical power output falls and then increases back to the previous level.

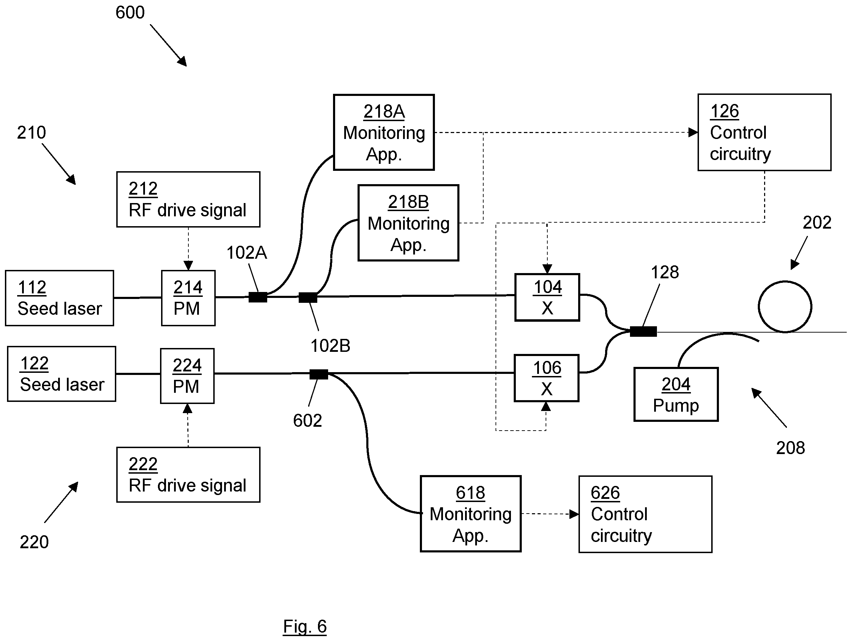

In an embodiment, illustrated in Figure 6, the optical source 600 secondary optical channel further comprises a secondary optical tap 602 for forming a secondary optical tap signal and secondary optical monitoring apparatus 618. The secondary optical tap is provided after the second PM 224. The secondary optical monitoring apparatus is configured to receive the secondary optical tap signal and is configured to output a second alarm signal responsive to determining that the secondary optical tap signal is indicative of a fault in the second RF drive signal apparatus 222 and/or the second PM 224 resulting in insufficient broadening of the seed laser signal.

In this embodiment, the control circuitry 626 is additionally configured to output a secondary switching control signal, responsive to receiving the second alarm signal, configured to cause the second SOA to be configured to absorb optical signals and to cause the first SOA to be configured to amplify optical signals.

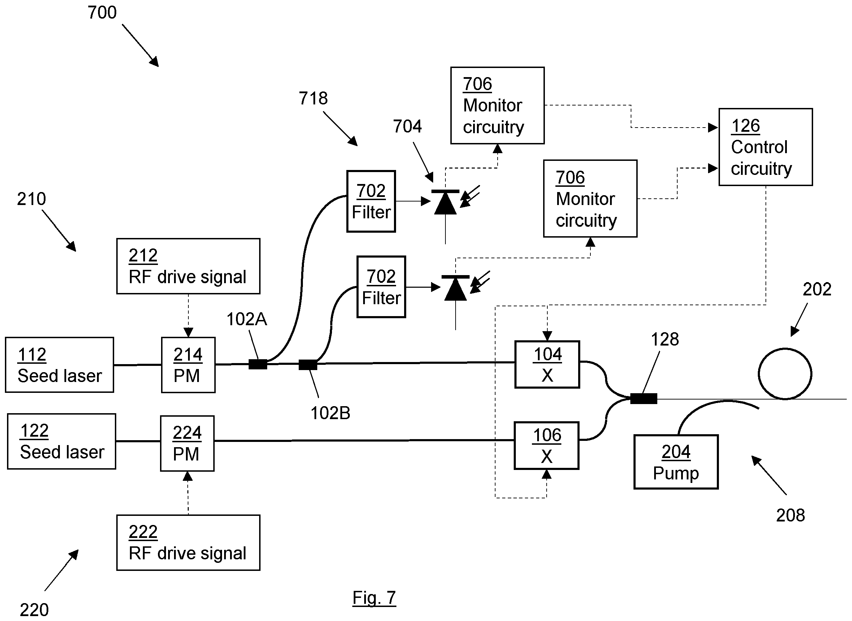

Referring to Figure 7, an embodiment provides an optical source 700 comprising a primary channel, a secondary channel, an optical fibre amplifier 208, an optical combiner 128, a plurality of optical taps 102 and control circuitry 126 as described above with reference to Figure 1, and a plurality of optical monitoring apparatus 718.

Each optical monitoring apparatus 718 comprises optical filter apparatus 702, a photodetector 704 and monitoring control circuitry 706. The optical filter apparatus is configured to receive the optical tap signal from the optical tap. The optical filter apparatus has a transmission profile configured to modify an optical power of the respective optical tap signal dependent on its spectral linewidth, to form a respective optical monitoring signal having an optical power indicative of the spectral linewidth of the respective optical tap signal. The photodetector is configured to detect the respective optical monitoring signal and to output a respective detection signal indicative of the optical power of the respective optical monitoring signal. Each monitoring control circuitry is configured to receive the respective detection signal and to output a respective first alarm signal responsive to the respective detection signal being indicative of a fault in the first spectral broadening apparatus 114 resulting in insufficient broadening of the seed laser signal. The respective detection signal is indicative of the optical power of the respective monitoring signal, which is indicative of the spectral linewidth of the respective optical tap signal and thus is indicative of the linewidth of the optical signal output from the first spectral broadening apparatus 114. If the linewidth is insufficiently broad, that is indicative of a fault in the first spectral broadening apparatus 114, as discussed above with reference to Figure 1.

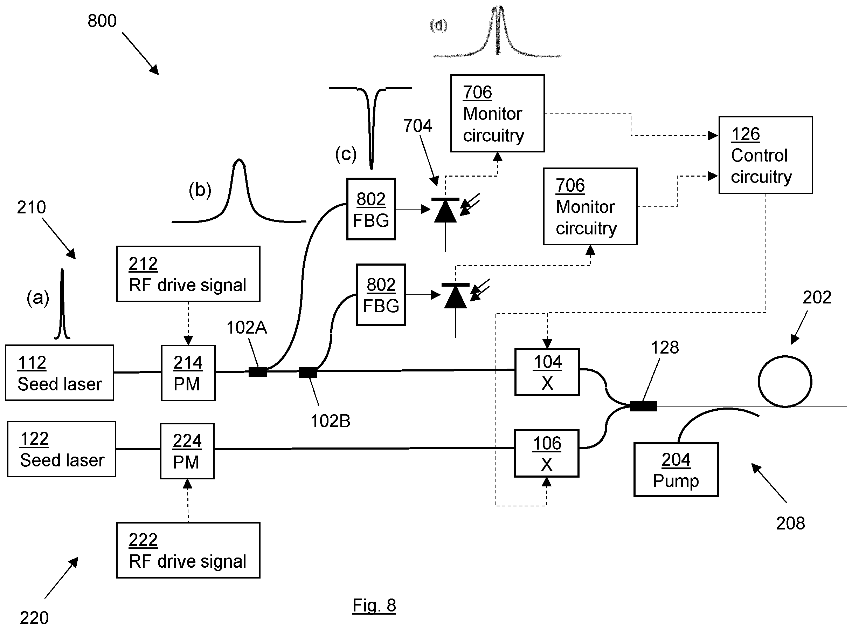

Referring to Figure 8, an embodiment provides an optical source 800 comprising a primary channel, a secondary channel, an optical fibre amplifier 208, an optical combiner 128, a plurality of optical taps 102 and control circuitry 126 as described above with reference to Figure 2, and a plurality of optical monitoring apparatus 818.

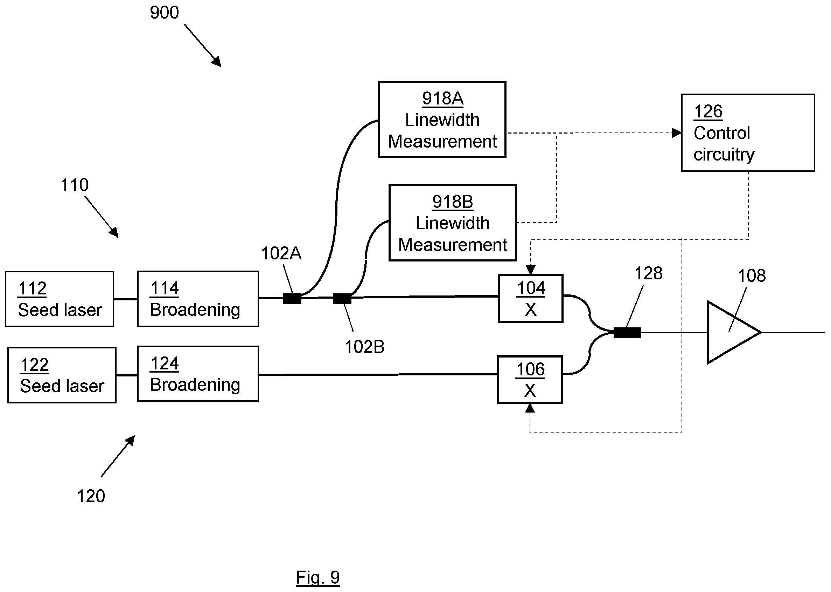

The primary channel comprises a primary optical signal source 210, which comprises a first seed laser 112 and a first spectral broadening apparatus comprising a first PM 214 and a first RF drive signal source 212, as described above with reference to Figure 2. The first seed laser 112 is for generating a first seed laser signal having a seed wavelength and a seed spectral linewidth, as shown in inset (a) of Figure 9. The first PM 214 is operative to apply phase modulation to the first seed laser signal, when a first RF drive signal is received from the first RF drive signal apparatus, to form a first broadened laser signal having a second spectral linewidth, broader than the seed spectral linewidth, as shown in inset (b) of Figure 9.

The secondary channel comprises a secondary optical signal source 220, which comprises a second seed laser 122 and a second spectral broadening apparatus comprising a second PM 224 and a second RF drive signal source 222, as described above with reference to Figure 2.

Each optical monitoring apparatus 718 comprises a fibre Bragg grating, FBG, 802, a photodetector 704 and monitoring control circuitry 706. The FBG is configured to receive a respective optical tap signal from the respective optical tap. The FBG has very high reflectivity (in the range 90 - 99%) at the wavelengths of the first seed laser signal and transmits other wavelengths of the optical tap signal; the transmission profile of the FBG is shown in inset (c) of Figure 9. The FBG modifies an optical power of the respective optical tap signal dependent on its spectral linewidth, to form a respective optical monitoring signal having an optical power indicative of the spectral linewidth of the respective optical tap signal. This is because transmission through the FBG forms a notch in the optical spectrum of an optical tap signal from a first broadened laser signal, as illustrated in inset (d) of Figure 9.

In operation, if the RF signal power of the RF drive signal falls, as a result of a fault with the first RF drive signal apparatus 212, the amount of spectral broadening performed by the first PM 214 will be correspondingly reduced. The total optical power of each optical monitoring signal will therefore fall since each FBG will still filter out the same wavelengths but these will be a larger proportion of the optical spectrum of the respective optical tap signal. If there is a fault with the first RF drive signal apparatus 212 that results in no RF drive signal being generated, or if there is a fault with the first PM 214 that results in no phase modulation occurring, the first seed laser signal will pass through the first PM 214 unbroadened. Since the FBGs have very high reflectivity at the wavelengths of the first seed laser signal, very little of an unbroadened first seed laser signal will be transmitted by each FBG, meaning the respective optical monitoring signals will have very low total optical power.

Each photodetector is configured to detect the respective optical monitoring signal and to output a respective detection signal indicative of the optical power of the respective optical monitoring signal. Each monitoring control circuitry is configured to receive the respective detection signal and to output a respective first alarm signal responsive to the respective detection signal being indicative of a fault in the first PM 214 and/or the first RF drive signal apparatus 212 resulting in insufficient broadening of the seed laser signal. Each detection signal is indicative of the optical power of the respective monitoring signal, which is indicative of the spectral linewidth of the respective optical tap signal and thus is indicative of the linewidth of the optical signal output from the first spectral broadening apparatus 114. If the linewidth is insufficiently broad, that is indicative of a fault in the first PM 214 and/or the first RF drive signal apparatus 212, as discussed above.

Referring to Figure 9, an embodiment provides an optical source 900 comprising a primary channel, a secondary channel, an optical fibre amplifier 108, an optical combiner 128, a plurality of optical taps 102 and control circuitry 126 as described above with reference to Figure 1, and a plurality of optical monitoring apparatus 918.

The plurality of optical monitoring apparatus 918 are configured to receive respective optical tap signals from the optical taps. In this embodiment, a first optical monitoring apparatus 918A is configured to receive an optical tap signal from the first optical tap 102A and a second optical monitoring apparatus 918B is configured to receive an optical tap signal from the second optical tap 102B.

Each optical monitoring apparatus comprises optical linewidth measurement apparatus 918 configured to determine a linewidth of a received optical tap signal. The optical linewidth measurement apparatus is additionally configured to output a respective first alarm signal responsive to determining that the optical tap signal has a spectral linewidth indicative of a fault in the first spectral broadening apparatus 114 resulting in insufficient broadening of the seed laser signal.

In an embodiment, the optical linewidth measurement apparatus 918 comprises a diffraction type optical spectrum analyser.

In an alternative embodiment, the optical linewidth measurement apparatus 918 comprises optical interferometer based linewidth measurement apparatus.

The optical interferometer based linewidth measurement apparatus may comprise a reference laser for generating a reference laser signal, a high speed photodiode and an electrical spectrum analyser. The optical interferometer based linewidth measurement apparatus is configured to perform heterodyne linewidth measurement. The optical tap signal is mixed with the reference laser signal and the combined laser signal is received and detected by the high speed photodiode. The resulting beat signal produced on a high speed photodiode is measured using the electrical spectrum analyser. The measured electrical spectrum is the convolution of the spectrum of the reference laser signal with that of the optical tap signal.

Alternatively, the optical interferometer based linewidth measurement apparatus may comprise an optical splitter, an optical delay line, an optical frequency shifter, a high speed photodiode and an electrical spectrum analyser. The optical interferometer based linewidth measurement apparatus is configured to perform delayed self-heterodyne linewidth measurement. The optical tap signal is split in two by the optical splitter, and one half is delayed and frequency shifted. The optical tap signal is mixed with the delayed and frequency shifted replica of itself. The resulting interference signal is centred at the modulation frequency used to frequency shift the delayed replica. The detected electrical spectrum is the convolution of the optical spectrum of the laser signal being measured with itself.

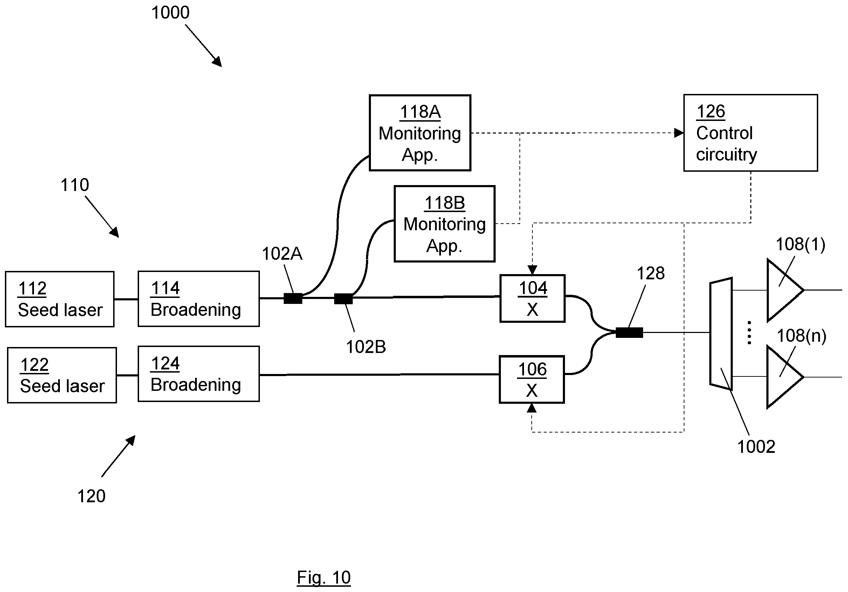

Referring to Figure 10, an embodiment provides an optical source 1000 comprising a primary channel, a secondary channel, an optical combiner 128, a plurality of optical taps 102, a plurality of optical monitoring apparatus 118, and control circuitry 126, as described above with reference to Figure 1.

The optical source 1000 comprises a plurality of optical amplifiers 108, as described above, and an optical splitter 1002. The optical splitter is configured to split broadened laser signals received from the optical combiner 128 and route the split broadened laser signals to respective optical amplifiers 108(1) to 109(n).

In an embodiment, each optical fibre amplifier 108 comprises an active optical fibre and a pump laser, as described above with reference to Figure 2. The at least one switching control signal is further configured to cause each pump laser to switch off.

An embodiment provides high energy laser processing system comprising an optical source 100, 200, 300, 400, 500, 600, 700, 800, 900, 1000 as described above with reference to any one of Figures 1 to 4 and 6 to 10.

An embodiment provides a laser directed energy weapon comprising an optical source 100, 200, 300, 400, 500, 600, 700, 800, 900, 1000 as described above with reference to any one of Figures 1 to 4 and 6 to 10.

## Claims

1. An optical source (100, 150, 200, 300, 400, 500, 600, 700, 800, 900, 1000) comprising:
a primary channel comprising a primary optical signal source (110), a plurality of optical taps (102) after the primary optical signal source for forming a plurality of optical tap signals and a first fast optical switch (104, 304) at an output end of the primary channel; a secondary channel comprising a secondary optical signal source (120) and a second fast optical switch (106, 306) at an output end of the secondary channel,
wherein each optical signal source comprises:
a seed laser (112, 122) for generating a seed laser signal having a seed spectral linewidth; and
spectral broadening apparatus (114, 124) operable to broaden the seed laser signal to output a broadened laser signal having a second spectral linewidth, broader than the seed spectral linewidth;
an optical fibre amplifier (108, 208) for amplifying a said broadened laser signal;
an optical combiner (128) arranged to couple the primary channel and the secondary channel to the optical fibre amplifier;
a plurality of optical monitoring apparatus (118, 218) configured to receive respective optical tap signals and each configured to output a respective first alarm signal responsive to determining that the respective optical tap signal is indicative of a fault in the spectral broadening apparatus of the primary optical signal source resulting in insufficient broadening of the seed laser signal; and
control circuitry (126, 326, 526, 626) configured to: output at least one initial control signal configured to cause the first fast optical switch to pass optical signals and the second fast optical switch to block optical signals; and output at least one switching control signal responsive to receiving respective first alarm signals from a majority of the optical monitoring apparatus, wherein the at least one switching signal is configured to cause the first fast optical switch to be configured to block optical signals and to cause the second fast optical switch to be configured to pass optical signals.

2. The optical source of claim 1, wherein the spectral broadening apparatus comprises:
radio frequency, RF, drive signal apparatus (212, 222) operative to generate an RF drive signal having an RF signal power; and
a phase modulator (214, 224) operative to apply phase modulation to the seed laser signal when an RF drive signal is received to form a broadened laser signal having the second spectral linewidth and operative to output the seed laser signal unbroadened when an RF drive signal is not received, and
wherein the optical monitoring apparatus (218, 818) is configured to output a first alarm signal responsive to determining that the first optical tap signal is indicative of a fault in at least one of the RF drive signal apparatus (212) or the phase modulator (214) of the primary optical signal source (210) resulting in insufficient broadening of the seed laser signal.

3. The optical source of any one of claim 1 or claim 2, wherein the first fast optical switch is a first semiconductor optical amplifier, SOA, (304) and the second fast optical switch is a second SOA (306), and wherein the at least one initial control signal is configured to cause the first SOA to be configured to amplify optical signals and to cause the second SOA to be configured to absorb optical signals, and the at least one switching control signal is configured to cause the first SOA to be configured to absorb optical signals and to cause the second SOA to be configured to amplify optical signals.

4. The optical source of any one of claims 1 to 3, wherein the primary optical channel further comprises an optical delay line (402) between the a final optical tap (102) and the first fast optical switch (104, 304).

5. The optical source of claim 4, wherein the optical delay line is configured to apply a delay greater than a time required for a majority of the optical monitoring apparatus to determine that respective first optical tap signals are indicative of a fault in the spectral broadening apparatus and for the first fast optical switch to be configured to block optical signals.

6. The optical source of any one of claims 1 to 5, wherein the optical fibre amplifier (208) comprises an active optical fibre (202) and a pump laser (204).

7. The optical source of claim 6, wherein the control circuitry is configured to output:
a first switching control signal configured to cause the first fast optical switch to be configured to block optical signals;
a second switching control signal configured to cause the pump laser to switch off; and
a third switching control signal configured to cause the second fast optical switch to be configured to pass optical signals,
wherein the control circuitry is configured to output the third switching control signal subsequently to the first switching control signal and the second switching control signal.

8. The optical source of any one of claims 1 to 7, wherein:
the secondary optical channel further comprises a secondary optical tap (602) after the secondary optical signal source for forming a secondary optical tap signal; and
secondary optical monitoring apparatus (618) configured to receive the secondary optical tap signal and configured to output a second alarm signal responsive to determining that the secondary optical tap signal is indicative of a fault in the spectral broadening apparatus of the secondary optical signal source resulting in insufficient broadening of the seed laser signal,
and wherein the control circuitry (626) is further configured to output at least one secondary switching control signal, responsive to receiving the second alarm signal, configured to cause the second fast optical switch to be configured to block optical signals and to cause the first fast optical switch to be configured to pass optical signals.

9. The optical source of any one of the preceding claims, wherein optical monitoring apparatus (718, 818) comprises:
optical filter apparatus (702, 802) having a transmission profile configured to form an optical monitoring signal by modifying an optical power of a received optical tap signal dependent on a spectral linewidth of the optical tap signal;
a photodetector (704) configured to detect the optical monitoring signal and to output a detection signal indicative of the optical power of the optical monitoring signal; and
monitoring control circuitry (706) configured to receive the detection signal and to output a said alarm signal responsive to the optical monitoring signal having an optical power indicative of a spectral linewidth indicative of a fault in the spectral broadening apparatus of the primary optical source resulting in insufficient broadening of the seed laser signal.

10. The optical source of claim 9, when dependent on claim 2, wherein the monitoring control circuitry (706) is configured to output a said alarm signal responsive to the optical monitoring signal having an optical power indicative of a spectral linewidth indicative of a fault in at least one of the RF drive signal apparatus (212) or the phase modulator (214) of the primary optical signal source resulting in insufficient broadening of the seed laser signal.

11. The optical source of any one of claims 1 to 8, wherein optical monitoring apparatus comprises optical linewidth measurement apparatus (918) configured to determine a linewidth of a received optical tap signal and configured to output a said alarm signal responsive to determining that the optical tap signal has a spectral linewidth indicative of a fault in the spectral broadening apparatus of the primary optical source resulting in insufficient broadening of the seed laser signal.

12. The optical source of claim 11, wherein the optical linewidth measurement apparatus (918) comprises one of an optical spectrum analyser and optical interferometer based linewidth measurement apparatus.

13. The optical source of any one of the preceding claims, wherein the seed laser signal has a seed optical power in the range 1 mW to 200 mW, and wherein the optical source comprises a plurality of optical fibre amplifiers (108, 158) for amplifying a said broadened laser signal and the optical fibre amplifiers are arranged in series and are configured to amplify the broadened laser signal to an optical power of up to 5 kW.

14. The optical source of any one of the preceding claims, further comprising a plurality of optical amplifiers (108) and an optical splitter (1002) configured to split broadened laser signals received from the optical combiner (128) and route the split broadened laser signals to respective optical amplifiers.

15. The optical source of claim 14, wherein each optical fibre amplifier (108) comprises an active optical fibre and a pump laser, and wherein the at least one switching control signal is further configured to cause each pump laser to switch off.

16. The optical source of any one of the preceding claims, wherein the seed lasers are one of distributed feedback, DFB, fibre lasers, bulk nonplanar ring oscillators, NPRO, DFB diode lasers, distributed Bragg reflector, DBR, diode lasers, or external cavity diode lasers.

17. A high energy laser processing system comprising an optical source (100, 200, 300, 400, 500, 600, 700, 800, 900, 1000) according to any one of claims 1 to 16.

18. A laser directed energy weapon comprising an optical source (100, 200, 300, 400, 500, 600, 700, 800, 900, 1000) according to any one of claims 1 to 16.
